# EUROPÄISCHE PATENTSCHRIFT

(11) **EP 3 325 930 B1**
(45) Veröffentlichungstag und Bekanntmachung des Hinweises auf die Patenterteilung: **29.07.2020**
(21) Anmeldenummer: 16724660.2
(22) Anmeldetag: 25.05.2016
(51) Int. Cl.: G01L 3/10

(54) **MESSANORDNUNG ZUR MESSUNG DES DREHMOMENTES AN EINER WELLE, KURBELTRIEB UND FAHRZEUG**
MEASURING ASSEMBLY FOR MEASURING THE TORQUE ON A SHAFT, CRANK DRIVE AND VEHICLE
DISPOSITIF DE MESURE POUR MESURER LE COUPLE DE ROTATION SUR UN ARBRE, MÉCANISME BIELLE-MANIVELLE ET VÉHICULE

(30) Priorität: 23.07.2015 DE 102015213902
(43) Veröffentlichungstag der Anmeldung: 30.05.2018
(73) Patentinhaber: Robert Bosch GmbH, 70442 Stuttgart (DE)
(72) Erfinder: BRAUN, Sigmund, 72127 Kusterdingen (DE); BINDER, Julian, 76137 Karlsruhe (DE)
(86) Internationale Anmeldenummer: PCT/EP2016/061753
(87) Internationale Veröffentlichungsnummer: WO 2017/012753

(56) Entgegenhaltungen:
- DE-A1-102009 008 074
- DE-A1-102012 214 332
- JP-A- S6 333 634

## Beschreibung

### Stand der Technik

Die vorliegende Erfindung betrifft eine Messanordnung zur Messung des Drehmomentes an einer Welle, einen Kurbeltrieb, und ein Fahrzeug. Sie betrifft insbesondere eine Messanordnung zur Messung des Torsionsmomentes einer Welle, einen Kurbeltrieb für ein mit Muskelkraft und/oder Motorkraft betreibbares Fahrzeug sowie ein mit Muskelkraft und/oder Motorkraft betreibbares Fahrzeug.

Elektrische und/oder mit Muskelkraft betreibbare Fahrzeuge sind aus dem Stand der Technik in unterschiedlichen Ausgestaltungen bekannt. Bei derartigen Fahrzeugen ist es oft wünschenswert, ein auf eine Welle wirkendes tordierendes Moment oder Drehmoment zu ermitteln. Dabei kann der Effekt der Magnetostriktion, Magnetoelastizität oder der inversen Magnetostriktion oder Magnetoelastizität ausgenutzt werden. Dieser Effekt beruht auf der Deformation magnetischer, insbesondere ferromagnetischer Stoffe infolge eines angelegten magnetischen Feldes. Ein entsprechender Körper erfährt bei konstantem Volumen eine elastische Längenänderung. Umgekehrt werden bei der inversen Magnetostriktion oder Magnetoelastizität durch eine aufgeprägte Längen- oder Formänderung die magnetischen Eigenschaften geändert.

Dies kann ausgenutzt werden, um das Drehmoment, das auf eine Welle wirkt, zu bestimmen. Dazu ist ein Teil der Welle mit oder aus einem Material gebildet, welches den Effekt der inversen Magnetostriktion oder Magnetoelastizität zeigt.

Problematisch ist jedoch, dass zwischen diesem Teil der Welle und einem Sensor, der das Magnetfeld und seine Änderung messen soll, ein bestimmter Abstand besteht, da der Sensor mit einem Sensorhalter außerhalb der zu vermessenden Welle angeordnet ist. Sind Sensor und Sensorwelle, also diejenige Welle, deren Drehmoment oder Torsionsmoment zu bestimmen ist und die entsprechend mit dem magnetostriktiven Material ausgebildet ist, nicht konstant konzentrisch zueinander ausgerichtet, so können statische Messabweichungen des Sensorsignals auftreten, die bedingt sind durch einen unterschiedlichen Abstand oder Luftspalt zwischen Sensor und Sensorwelle.

Zusätzlich können durch Fehler im Rundlauf der Welle und der Koaxialität auch dynamische Fehler auftreten, die das Sensorsignal und deren Auswertung negativ beeinflussen.

Aus der Schrift JP S63 33634 A ist ein Sensorhalter für einen Drehmomentsensor mit einem Temperaturkompensationselement bekannt.

### Offenbarung der Erfindung

Die erfindungsgemäße Messanordnung mit den Merkmalen des unabhängigen Anspruchs 1 weist demgegenüber den Vorteil auf, dass der Abstand oder Luftspalt zwischen Sensorhalter und Sensor einerseits und der zu vermessenden Welle andererseits besonders gering ausgebildet oder gar minimiert werden kann und dass dessen Änderungen beim Rotieren der Welle ebenfalls besonders gering gehalten oder sogar ausgeglichen werden können. Dies wird erfindungsgemäß durch eine Messanordnung zur Messung des Drehmomentes an einer Welle und insbesondere des Torsionsmomentes der Welle erreicht, welche ausgebildet ist mit einer Sensoreinrichtung, welche eingerichtet ist, ein von der Welle getragenes oder erzeugtes Magnetfeld zu messen, mit einem Sensorhalter zum Halten der Sensoreinrichtung sowie zur Anordnung der Sensoreinrichtung gegenüber einem Bereich einer Außenumfangsfläche der Welle und mit mindestens einem Kraftelement, welches eingerichtet ist, insbesondere im montierten Zustand der Messanordnung durch Kraftbeaufschlagung den Sensorhalter gegenüber dem Bereich der Außenumfangsfläche der Welle ortsfest und insbesondere bezüglich Position, Orientierung und/oder Abstand zeitlich stabil anzuordnen.

Zusätzlich ist das mindestens eine Kraftelement eingerichtet, auf den Sensorhalter eine Zugkraft so auszuüben, dass durch die Zugkraft der Sensorhalter an den Bereich der Außenumfangsfläche der Welle herangezogen wird. Dies ermöglicht eine besonders innige Anordnung des Sensorhalters und der darin aufgenommenen Sensoreinrichtung der erfindungsgemäßen Messanordnung in Bezug auf den Bereich der Umfangsaußenflächen der zu vermessenden Welle, um deren getragenes oder erzeugtes Magnetfeld und/oder dessen Änderungen zu messen.

Durch das Zugkraftelement wird der Sensor an der Oberfläche der zu vermessenden Welle angestellt. Somit kann ein vergrößerter Luftspalt vermieden werden, welcher entstehen kann auf Grund einer Toleranzkette der Anordnung, die ihrerseits aus einer festen Gehäusemontage und aus Fertigungstoleranzen resultiert. Weiterhin können durch die Kombination aus Sensorhalter und Kraftelement Fehler im Rundlauf und Neigungen der Welle und somit Winkelfehler erfindungsgemäß ausgeglichen werden.

Die Unteransprüche zeigen bevorzugte Weiterbildungen der Erfindung.

Bei einer vorteilhaften Ausgestaltungsform der erfindungsgemäßen Messanordnung ist das mindestens eine Kraftelement eingerichtet ist, mit der Zugkraft an einer der Welle zugewandten Außenseite des Sensorhalters anzugreifen. Diese Maßnahme liefert einen besonders einfachen Aufbau der erfindungsgemäßen Messanordnung, da bei Zugkräften Anordnungen ohne Abstützpunkte an einem äußeren Gehäuse einsetzbar sind.

Es ist von besonderem Vorteil, wenn das mindestens eine Kraftelement als elastisches Kraftelement, insbesondere als federndes Element oder dergleichen, ausgebildet ist. Durch diese Maßnahmen stellt sich ein besonders hoher Grad an Reproduzierbarkeit bei der Messanordnung ein, weil sich das Kraftelement auf Grund seiner Elastizität auf die jeweilige Beanspruchung einstellen kann.

Bei einer weiteren Ausgestaltung der erfindungsgemäßen Messanordnung weist das mindestens eine Kraftelement mindestens einen Halteschenkel auf. Der mindestens eine Halteschenkel ist mit dem Sensorhalter gekoppelt und erstreckt sich in Wirkrichtung der Zugkraft und zu einer dem Sensorhalter abgewandten Seite der Welle hin. Dabei umfasst der mindestens eine Halteschenkel die Welle in deren Umfangsrichtung und stützt sich dort an der Außenumfangsfläche der Welle ab, insbesondere mit einem distalen Ende des Halteschenkels. Der mindestens eine Halteschenkel ist so vorgespannt, dass er über die Kopplung an den Sensorhalter und über das Abstützen an der Außenumfangsfläche der Welle die Zugkraft auf den Sensorhalter ausübt. Durch diese Maßnahmen werden die Reproduzierbarkeit der Ergebnisse der Messanordnung und deren Genauigkeit weiter gesteigert.

Obwohl ein einzelner Halteschenkel, sofern er ein entsprechendes Widerlager zur Ausbildung einer Zugkraft definiert, ausreichend ist, um die erfindungsgemäßen Vorteile zu bewirken, ist es von besonderem Vorteil, wenn nicht nur ein einzelner Halteschenkel verwendet wird. Bei einer Weiterbildung der Erfindung ist daher ein Paar Halteschenkel ausgebildet. Die Halteschenkel des Paares liegen oder stehen in Bezug auf den Sensorhalter und die Welle einander gegenüber und sind an gegenüberliegenden Stellen des Sensorhalters mit dem Sensorhalter gekoppelt. Sie umfassen die Welle in deren Umfangsrichtung in entgegen gesetzten Richtungen. Durch das Vorsehen eines Paares von Halteschenkeln, die insbesondere gleichartig und bevorzugt zueinander spiegelsymmetrisch aufgebaut sind, ergibt sich eine symmetrische Anordnung der Messanordnung, die zu einer symmetrischen Kraftverteilung beim Halten des Sensorhalters und der Sensoreinrichtung führen. Die Symmetrie liefert ein weiter gesteigertes Maß an Genauigkeit und Reproduzierbarkeit der Messergebnisse.

Dabei ergibt sich eine besonders einfache Form der Herstellung, aber auch der Montage, wenn die Anzahl der zu produzierenden und zu montierenden Komponenten der Messanordnung gering gehalten wird. Dies wird bei einer bevorzugten Ausführungsform dadurch erreicht, dass der Halteschenkel oder das Paar von Halteschenkeln mit der Sensorhalter verbunden ist, insbesondere in materialeinstückiger Form. Dabei können der Halteschenkel oder das Paar von Halteschenkeln mit der Außenumfangsfläche der Welle zugewandten Schenkelflächen oder Teilen davon an der Außenumfangsfläche der Welle anliegen und/oder die Welle in deren Umfangsrichtung um insgesamt mehr als 180° und weniger als 360° umfassen.

Es ist von besonderem Vorteil, wenn der Sensorhalter mindestens eine Lagerstelle bildet, welche insbesondere als Halbschalenlagerung ausgebildet ist und/oder durch das mindestens eine Kraftelement am Bereich der Außenumfangsfläche der Welle federnd angestellt ist. Dadurch ergibt sich eine besonders einfache Montage des zu Grunde liegenden Sensorhalters der Messanordnung. Weiterhin kann durch Integration der Messanordnung in ein Lager die Anzahl der zu montierenden Teile reduziert werden.

Durch das Ausbilden einer Lagerstelle mit ein oder mehreren Kontaktstellen zwischen Welle und Sensorhalter wird die Beeinflussung der Welle durch die Messanordnung gering gehalten.

Die gegenseitige Beeinflussung und die Reibung und damit die Abnutzung zwischen Messanordnung und zu vermessender Welle können besonders gering gehalten werden, wenn die Kontaktstellen als Gleitlager und/oder Gleitbuchsen oder Bundbuchsen ausgebildet sind, vorzugsweise als in den Sensorhalter eingesetzte Elemente und/oder dadurch, dass der Sensorhalter insgesamt oder ein Bereich des Sensorhalters, welcher der Welle zugewandt ist, mit oder aus einem gleitenden Material ausgebildet ist.

Denkbar ist dabei eine Ausführungsform mit geschlitzten Bundbuchsen zur Definition der Kontaktstellen. Dabei kann die geschlitzte - gerade oder schräge - Bundbuchse einseitig eingesetzt werden. Diese kann dann die gesamte Breite der Lagerstelle überdecken. Dies bietet den Vorteil einer vereinfachten Montage der Baugruppe, weil der Vorgang des Einsteckens der Torsionswelle in einen Sensorhalter vereinfacht wird.

Der Bund legt die axiale Lage der Buchse fest und kann durch einen Aussparung als Verdrehsicherung zwischen einem Gleitlager und dem Sensorhalter wirken.

Eine besonders einfache Montage der erfindungsgemäßen Messanordnung ergibt sich dadurch, dass die Gleitlager und/oder Gleitbuchsen als Teilkreisstücke jeweils mit einem Bogen von weniger als 180° ausgebildet sind.

Die Zuverlässigkeit der erfindungsgemäßen Messanordnung kann gesteigert werden, indem eine Verdrehsicherung ausgebildet ist, ein Mitdrehen des Sensorhalters mit der Welle zu verhindern. Die Verdrehsicherung kann Teil des Sensorhalters sein und/oder eine oder mehrere Bohrungen oder Rippen aufweisen. Durch diese Maßnahmen wird erreicht, dass die Positionierung der erfindungsgemäßen Messanordnung sich im Betrieb nicht verändert.

Ein besonders hohes Maß an Genauigkeit der Messergebnisse der erfindungsgemäßen Messanordnung stellt sich dadurch ein, dass der Bereich der Außenumfangsfläche der Welle von einem Torsionselement, insbesondere von einer Torsionswelle, mit oder aus einem magnetostriktiven und/oder magnetoelastischen Material gebildet wird, das eingerichtet ist zur Drehmomentübertragung als Zwischenwellenstück zwischen ersten und zweiten Wellenabschnitten der Welle. Die Verwendung eines magnetostriktiven und/oder magnetoelastischen Materials ermöglicht über eine entsprechende Eichung eine sehr genaue Ermittlung des zu übertragenden Drehmoments oder des erfahrenen Torsionsmoments der Welle.

Gemäß einem weiteren Aspekt der vorliegenden Erfindung wird ein Kurbeltrieb für ein mit Muskelkraft und/oder Motorkraft betreibbares Fahrzeug und insbesondere für ein Elektrofahrrad geschaffen, welcher eine Welle aufweist, die zur Aufnahme und drehfesten Kopplung mit mindestens einer Kurbel zur Drehmonentübertragung eingerichtet ist. Des weiteren ist eine erfindungsgemäße Messanordnung zur Messung des Drehmoments an der Welle und insbesondere des Torsionsmomentes der Welle ausgebildet.

Durch diese Maßnahmen kann durch die Integration der erfindungsgemäßen Messanordnung im Kurbeltrieb eine besonders kompakte Bauweise erzielt werden.

Gemäß einem anderen Aspekt schafft die vorliegende Erfindung ein mit Muskelkraft und/oder Motorkraft betreibbares Fahrzeug, insbesondere ein Elektrofahrrad. Dieses umfasst einen erfindungsgemäßen Kurbeltrieb, einen elektrischen Antrieb, welcher insbesondere im Bereich des Kurbeltriebs angeordnet ist, und eine Steuereinheit, welche zur Steuerung des elektrischen Antriebs eingerichtet ist.

### Kurzbeschreibung der Figuren

Nachfolgend werden bevorzugte Ausführungsbeispiele der Erfindung unter Bezugnahme auf die begleitende Zeichnungen beschrieben.
- Figur 1: ist eine schematische Darstellung für ein Beispiel eines Fahrzeugs nach Art eines Elektrofahrrads, bei welchem eine erste Ausführungsform der Erfindung realisiert ist,
- Figuren 2 und 3: zeigen schematische und geschnittene Ansichten einer Ausführungsform der erfindungsgemäßen Messanordnung, einmal als Querschnitt und einmal als Längsschnitt in Bezug auf die zu Grunde liegende Welle,
- Figuren 4 und 5: zeigen perspektivische und in Bezug auf die Welle quer bzw. längsgeschnittene Ansichten einer Ausführungsform, die mit einer erfindungsgemäßen Messanordnung weitergebildet werden kann,
- Figuren 6 und 7: zeigen in stärker schematisierter und ebenfalls in perspektivischer und teilweise geschnittener radialer bzw. axialer Ansicht eine weitere Ausführungsform der erfindungsgemäßen Messanordnung, und
- Figuren 8 und 9: zeigen eine perspektivische Seiten- bzw. Schrägansicht einer anderen Ausführungsform der erfindungsgemäßen Messanordnung.

### Bevorzugte Ausführungsformen der Erfindung

Nachfolgend werden unter Bezugnahme auf die Figuren weitere allgemeine Aspekte und Ausführungsbeispiele der Erfindung im Detail beschrieben.

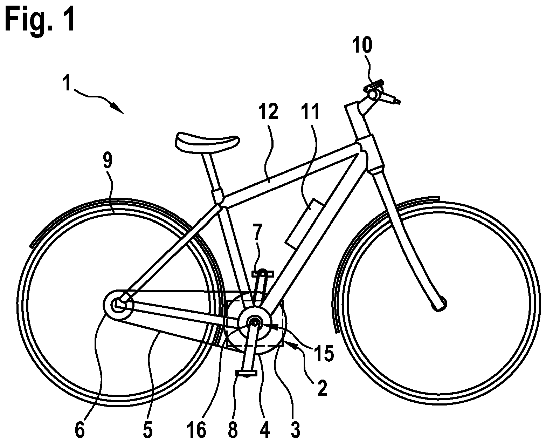

Zunächst wird unter Bezugnahme auf Figur 1 beispielhaft ein Elektrofahrrad 1 als eine bevorzugte Ausführungsform des erfindungsgemäßen Fahrzeugs im Detail beschrieben.

Das Elektrofahrrad 1 umfasst einen Kurbeltrieb 2 mit zwei Kurbeln 7, 8, an dem Pedale angeordnet sind. Ein elektrischer Antrieb 3 ist in den Kurbeltrieb 2 integriert. Am Hinterrad 9 ist eine Gangschaltung 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf Ritzel der Gangschaltung 6 bzw. von der Gangschaltung auf das Hinterrad 9 übertragen.

In diesem Zusammenhang seien Nabenschaltungen und Kettengangschaltungen mit umfasst, jeweils mit einem entsprechenden Kraftverlauf über das Schaltwerk und insbesondere über die Abfolge Kette, Schaltwerk, Ritzel und Nabe als Teil des Hinterrades.

Am Lenker des Fahrrads ist ferner eine Steuereinheit 10 angeordnet, welche mit dem elektrischen Antrieb 3 verbunden ist. Das Bezugszeichen 11 bezeichnet eine Batterie, welche zur Stromversorgung des elektrischen Antriebs 3 dient.

Im Rahmen 12 integriert ist das Kurbellager 15, Innenlager oder Tretlager, welches ein Kurbelgehäuse 60 aufweist, in dessen Innerem eine Ausführungsform der erfindungsgemäßen Messanordnung ausgebildet ist.

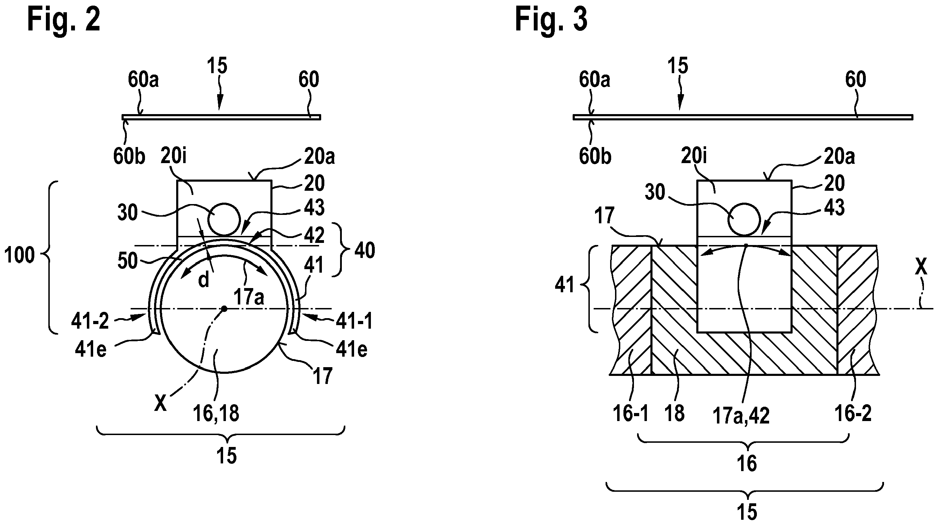

Die Figuren 2 und 3 zeigen schematisch einen Quer- bzw. Längsschnitt einer Ausführungsform der erfindungsgemäßen Messanordnung 100, und zwar geschnitten in Bezug auf die jeweils zu Grunde liegende Welle 16. Dargestellt ist ein Zustand, bei dem die Messanordnung 100 im Kurbelgehäuse 60 eines Kurbellagers 15, Innenlagers oder Tretlagers montiert ist.

Die Messanordnung 100 dieser Ausführungsform weist einen Sensorhalter 20 auf. Dieser kann auch als Sensorgehäuse bezeichnet werden kann und nimmt in seinem Inneren 20i eine Sensoreinrichtung 30 z.B. in Form eines Magnetfeldsensors auf. Der Sensorhalter 20 ist mit einem Teil seiner Außenseite 20a einer Welle 16 zugewandt und in räumlicher Nähe zu einem Abschnitt 17a einer Außenumfangsfläche 17 der Welle 16 mit einem Spalt 50 in Form eines Luftspalts dazwischen angeordnet. Dadurch befindet sich die Sensoreinrichtung 30 in relativer Nähe zum Bereich oder Abschnitt 17a der Außenumfangsfläche 17 der Welle 16. Die Sensoreinrichtung 30 kann so die magnetischen Eigenschaften und insbesondere das von der Welle 16 im Bereich 17a getragene oder erzeugte magnetische Feld und/oder Feldänderungen messen.

An der der Welle 16 zugewandten Seite der Außenseite 20a des Sensorhalters 20 ist ein Kraftelement 41 mit einem Paar Halteschenkel 41-1 und 41-2 ausgebildet, die mit ihren einen Enden an den Sensorhalter 20 gekoppelt sind und mit diesem verbunden sind.

Die ersten und zweiten Halteschenkel 41-1, 41-2 des Schenkelpaares als Kraftelement 41 weisen distale Enden 41e auf. Dies sind Enden, die vom Sensorhalter 20 und vom Anbringungspunkt an diesem am weitesten entfernt sind. Diese distalen Enden 41e bilden die oder liegen in äußersten Abschnitten der Halteschenkel 41-1, 41-2, mit denen die Halteschenkel 41-1, 41-2 die Außenumfangsfläche 17 der Welle 16 und insbesondere das Torsionselement 18 von gegenüberliegenden Seiten umfassen, um sich dort zumindest teilweise über Lagerstellen 42 abzustützen.

Das Kraftelement 41 mit elastischen Halteschenkeln 41-1, 41-2, ist so ausgebildet, dass es im montierten Zustand der Messanordnung 100 den Sensorhalter 20 mit einer Zugkraft beaufschlagt und somit den Sensorhalter 20 an den Bereich 17a der Außenumfangsfläche 17 der Welle 16 heranzieht und bezüglich Position, Orientierung und/oder Abstand zeitlich stabil anordnet.

Die Welle 16 ist um ihre Drehachse X rotationssymmetrisch ausgebildet und um diese Drehachse X rotierbar.

Die Welle 16 besteht bei dieser Ausführungsform aus einem ersten und einem zweiten Wellenabschnitt 16-1 bzw. 16-2, die der Drehmomentübertragung dienen. Zwischen dem ersten Wellenabschnitt 16-1 und dem zweiten Wellenabschnitt 16-2 ist zur Drehmomentübertragung zwischen diesen Wellenabschnitten 16-1, 16-2 ein Torsionselement 18 angeordnet, welches auch als Torsionswelle bezeichnet werden kann. Das Torsionselement ist mit oder aus einem magnetostriktiven und/oder magnetoelastischen Material gebildet.

Bei Übertragung eines Drehmoments zwischen den ersten und zweiten Wellenabschnitten 16-1 und 16-2 ist somit auch das Torsionselement 18 diesem übertragenden Drehmoment ausgesetzt, welches dort als Torsionsmoment wirkt. Das Drehmoment führt also zu einer Deformation im Sinne einer Torsion des Torsionselementes 18. Auf Grund der (inversen) magnetostriktiven und/oder magnetoelastischen Eigenschaften des zu Grunde liegenden Materials des Torsionselementes 18 führt die Deformation des Torsionselementes 18 zu einer Änderung des durch das Torsionselement 18 getragenen und/oder erzeugten Magnetfeldes.

Diese Änderung im Magnetfeld kann durch die Sensoreinrichtung 30 und den Magnetfeldsensor gemessen werden. Aus der Messung der Magnetfeldänderung können dann Rückschlüsse auf das tatsächlich wirkende Torsionsmoment oder das übertragene Drehmoment gezogen werden.

Zwischen dem Sensorhalter 20 und der Welle 16 ist ein Abstand oder Spalt 50 mit Spaltabstand oder Spaltbreite d ausgebildet. Durch die Druckkraft des Kraftelements 41 und den Andruck der Außenseite 20a an den Bereich 17a der Außenumfangsfläche 17 der Welle 16 und insbesondere des Torsionselements 18 wird diese Spaltbreite d des Spalts 50 konstant und insbesondere gering gehalten, und zwar verglichen mit einer entsprechenden Anordnung ohne Kraftelement 41.

Der Sensorhalter 20 bildet dazu eine Lagerstelle 42 im Sinne eines Gleitlagers gegenüber dem Bereich 17a der Außenumfangsfläche 17 der Welle 16 aus.

Das Kraftelement 41 und die Lagerstelle 42 können in Kombination als Halte- und Lageranordnung 40 für den Sensorhalter 20 am Bereich 17a der Außenumfangsfläche 17 der Welle 16 aufgefasst werden.

Aus der Darstellung der Figur 3 wird ersichtlich, dass die ersten und zweiten Halteschenkel 41-1, 41-2 lateral oder in axialer Richtung nicht weiter unterteilt sind. Die ersten und zweiten Schenkel 41-1 und 41-2 sind bei der Ausführungsform gemäß der Figuren 2 und 3 jeweils so breit ausgelegt, wie sich der Sensorhalter 20 in Richtung der Symmetrieachse X erstreckt. Dies ist jedoch keine zwingend erforderliche Anordnung.

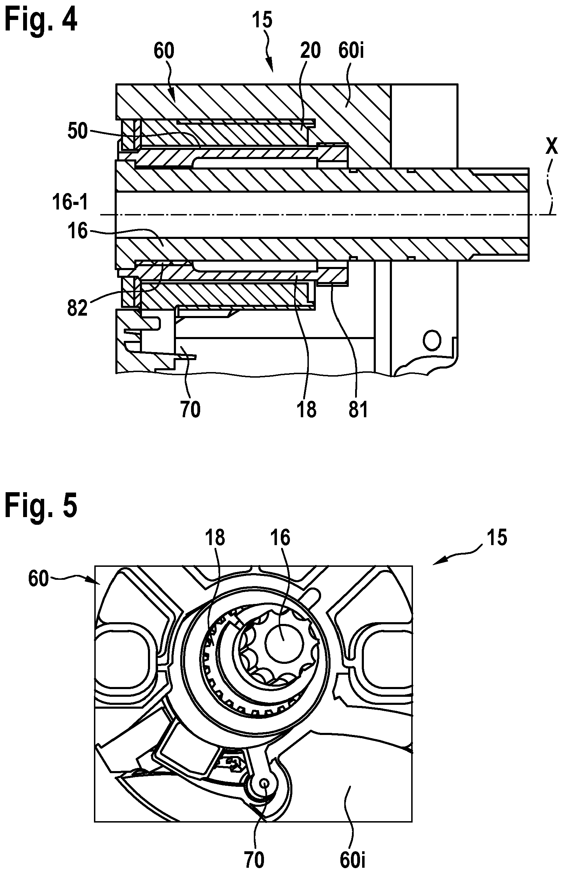

Die Figuren 4 und 5 zeigen eine Ausführungsform eines Kurbelgehäuses 60, welches erfindungsgemäß weitergebildet werden kann.

Im Falle einer derartigen Weiterbildung wird erfindungsgemäß die Messanordnung 100 ebenfalls im Inneren 60i eines Kurbelgehäuses 60 angeordnet. Bei dieser Ausführungsform ist das Torsionselement 18 als Torsionshülse ausgebildet und über erste und zweite Verzahnungen 81 bzw. 82 mit der Kurbelwelle 16 zur Drehmomenteinleitung und mit einem Getriebeelement für den Drehmomentabtrieb verbunden.

Ein derartiges Getriebeelement beinhaltet z.B. einen Freilauf derart, dass nur Torsionsmomente in einer Richtung auf die Torsionswelle als Torsionselement 18 einwirken. Weiterhin wäre in diesem Fall eine Getriebestufe vorgesehen, die den Elektromotor eines Elektrofahrrads in Kraftübertragung auf das Kettenblatt einbindet.

Zwischen dem Torsionselement 18 und dem Sensorhalter 20 ist wiederum ein Spalt 50 vorgesehen, der durch die erfindungsgemäße Ausgestaltung des Kraftelements 41 in seiner Breite d zeitlich konstant und/oder - im Vergleich zu einer entsprechenden Anordnung ohne Kraftelement 41 - besonders gering ist.

Durch eine Verdrehsicherung nach Art eines Anschraubpunktes wird im Betrieb eine feste Positionierung und/oder Orientierung des Sensorhalters 20 in Bezug auf das Kurbelgehäuse 60 einerseits und in Bezug auf die Welle 16 andererseits gewährleistet.

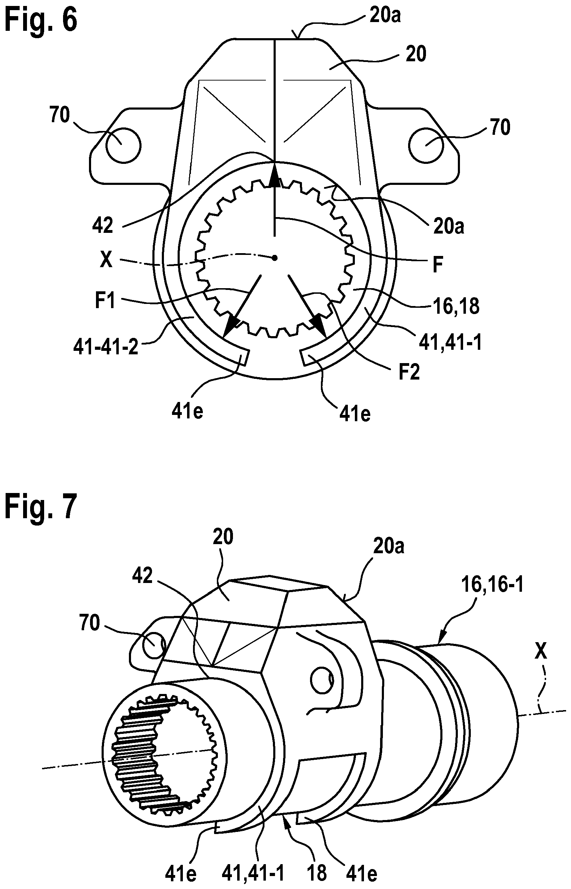

Die Figuren 6 und 7 zeigen in schematischer und perspektivischer sowie teilweise geschnittener Ansicht eine andere Ausführungsform der erfindungsgemäßen Messanordnung 100.

Die Halte- und Lageranordnung 40 wird gebildet von den Lagerstellen 42 und dem Kraftelement 41. Die Lagerstellen 42 gewährleisten zwischen dem Sensorgehäuse 20 einerseits und dem Bereich 17a Außenumfangsfläche 17 der Welle 16 und insbesondere des Torsionselement 18 andererseits einen Kontakt im Sinne eines Gleitlagers.

Das Kraftelement 41 ist mit seinen Halteschenkels 41-1, 41-2 wieder an der der Welle 16 zugewandten Außenseite 20a des Sensorhalters 20 angebracht, wobei die Sensorhalter die Welle 16 von gegenüberliegenden Seiten zu ihren distalen Enden 41e hin umgreifen oder umfassen und sich im Bereich 17a der Außenumfangsfläche 17 der Welle und des Torsionselements zumindest teilweise abstützen. Dabei werden durch die Haiteschenkel 41-1, 41-2 Anpresskräfte oder Schenkelkräfte F1 und F2 ausgeübt, durch die eine entsprechende resultierende Anstellkraft F als Gegenkraft erzeugt wird.

Gegenüber der Ausgestaltungsform gemäß der Figur 3 mit einteiligen Halteschenkeln 41-1, 41-2 ist bei der Ausführungsform gemäß Figur 7 jeder der Halteschenkel 41-1, 41-2 in axialer Richtung in zwei Teilschenkel oder Schenkelabschnitte in Zinkenform unterteilt. Ein derartiger Aufbau erhöht die mechanische Flexibilität des Kraftelements 41 als Ganzes und steigert dadurch das elastische Verhalten beim Haltern des Sensorhalters 20 an der Außenumfangsfläche 17 der Welle 16 und des Torsionselements 18.

Auf Grund der trotz der Gleitlagereigenschaften der Lagerstellen 42 vorhandenen Reibungskräfte zwischen Außenumfangsfläche 17 der Welle 16 und des Torsionselements 18 einerseits und der der Welle 16 zugewandten Außenseite 20a des Sensorhalters 20 andererseits ist das Vorsehen einer Verdrehsicherung 70 vorteilhaft. Diese kann gebildet werden zum Beispiel durch eine Befestigung des Sensorhalters 20 an einem Bereich des Kurbelgehäuses 60. Sie sorgt für eine drehfeste Position des Sensorhalters 20 im Kurbelgehäuse 60 und gegenüber der Welle 16 und dem Torsionselement 18.

Die beiden Schenkel 41-1 und 41-2 des Sensorhalters 20 können durch das Einschieben oder Einstecken einer im Außendurchmesser und gegenüber dem Innendurchmesser der Schenkel 41-1 und 41-2 größeren Welle 16 nach außen gedrückt werden.

Bedingt durch die vorausgesetzte Elastizität des Materials des Sensorhalters 20 ergibt sich für jeden Schenkel 41-1, 41-2, wie das oben beschrieben wurde, eine Anpresskraft F1 und F2, welche den Sensorhalter 20 mit der resultierenden Kraft F an der Langerstelle 42 anstellt. Die Kontaktstellen der Lagerstelle 42 zwischen Welle 16 und Sensorhalter 20 können als in den Sensorhalter 20 eingesetzte Gleitlager, Gleitringe, Bundbuchsen oder Gleitbuchsen ausgeführt werden. Diese können als Stücke eines Teilkreises oder als geschlitzter Ring und/oder mit Schlitz in gerader oder schräger Form ausgebildet sein, wobei der Schlitz auch gebildet werden kann von einer Trennfuge zwischen distalen Enden oder seitlich z.B. auf den 3-Uhr- oder 9-Uhr-Stellungen. Auch kann ein Aufbau gewählt werden, bei dem der gesamte Halter aus einem gleitenden Material, vorzugsweise aus einem Kunststoff oder aus zwei Komponenten gebildet wird: einem Gleitwerkstoff für die Lagerstelle 42 und die Halteschenkel 41-1, 41-2 und einem Formwerkstoff für die Aufnahme, das Gehäuse und die Halterungen.

Aus den Figuren 6 und 7 wird weiter ersichtlich, dass der Sensorhalter 20 mit einem Sensorkopf versehen und durch ein im Gehäuse abgestütztes und vorgespanntes elastisches Element als Kraftelement 41 mit zwei Zugkräfte ausübenden Halteschenkeln 41-1, 41-2 angestellt sein kann.

Der eigentliche Sensorhalter 20 oder sein Gehäuse kann mit oder aus zwei halbschalenförmigen Lagerschalen ausgebildet sein und auf der Welle 16 als Sensorwelle und durch das Kraftelement herangezogen aufsitzen. Dabei umschließen neben den Halteschenkeln 41-1, 41-2 auch die halbschalenförmigen Lagerschalen des Sensorhalters 20 die Welle 16. Die Halteschenkel 41-1, 41-2 umschließen die Welle 16 insbesondere mit einem Winkel von insgesamt weniger als 180°, wodurch die Montage erleichtert wird.

Die Lagerstellen 42 stellen Kontaktstellen zwischen Welle 16 einerseits und Sensorhalter 20, Kraftelement 41 und deren Halteschenkel 41-1, 41-2 andererseits bereit und können als in den Sensorhalter 20 und/oder das Kraftelement 41 eingesetzte Gleitlager oder Gleitbuchsen ausgeführt werden, welche zum Beispiel im Schnitt als Teilkreisstücke einen maximalen Winkel von 180° umfassen.

Der Sensorhalter 20 und/oder Kraftelement 41 können insgesamt aus einem gleitenden Material, vorzugsweise aus einem Kunststoff bestehen. Es können aber auch aus zwei Komponenten verwendet werden, zum Beispiel einem Gleitwerkstoff für die Lagerstellen 42 und/oder Halteschenkel 41-1, 41-2 und einem Formwerkstoff für die Aufnahme 43, das Gehäuse und die Halterungen.

Als Verdrehsicherung 70 können zum Beispiel zwei Bohrungen dienen, die eine vorläufige Position des Sensorhalters 20 im Gehäuse 60 vorgeben. Optional können auch Rippen oder einzelne Bohrungen als Verdrehsicherung 70 dienen. Möglich ist auch, eine negative Außenkontur des Sensorhalters 20 im Gehäuse vorzusehen, mit welcher sich ein spielbehafteter Formschluss mit dem Gehäuse ergibt.

Als Einsatzgebiete der Erfindung kommen unter anderem alle Anwendungen in Frage, bei denen eine Drehmomentmessung mittels (inversem) magnetostriktivem und/oder magnetoelastischem Effekt erfolgt oder denkbar ist. Insbesondere bietet sich der Einsatz dort an, wo besondere Anforderungen an die Sensorlage in Bezug auf die zu vermessende Welle 16 gestellt werden. Besonders bevorzugt ist der Einsatz bei Fahrrädern oder Pedelecs.

Es ist auch denkbar, dass die Kontaktstellen 42 ausgebildet werden als Gleitlager, Gleitringe, Gleitbuchsen und/oder Bundbuchsen.

Zusätzlich oder alternativ kann es vorgesehen sein, dass eine Verdrehsicherung der Gleitelemente gegenüber dem Sensorhalter 20 durch Formschluss, Fügen und/oder Kleben oder durch Reibung definiert wird, wobei ein höherer Reibwert zwischen Sensorhalter 20 und Gleitelement ausgebildet wird, als zwischen Gleitelement und Torsionselement 18 der Torsionswelle.

Im Hinblick auf zu verwendende gleitende Materialen können grundsätzlich sämtliche zur Verfügung stehenden Materialien verwendet werden, die gegenüber dem Torsionselement 18 einen geringeren Reibwert aufweisen und/oder einen geringeren E-Modul besitzen.

Typische Reibwerte von verwendbaren Polymeren liegen im Bereich von 0,04 und 0,25. Denkbar ist die Verwendung von reibungsarmen Thermoplasten, z.B. von PTFE, Teflon, usw., insbesondere als Gleitschicht in Folienform oder dgl.

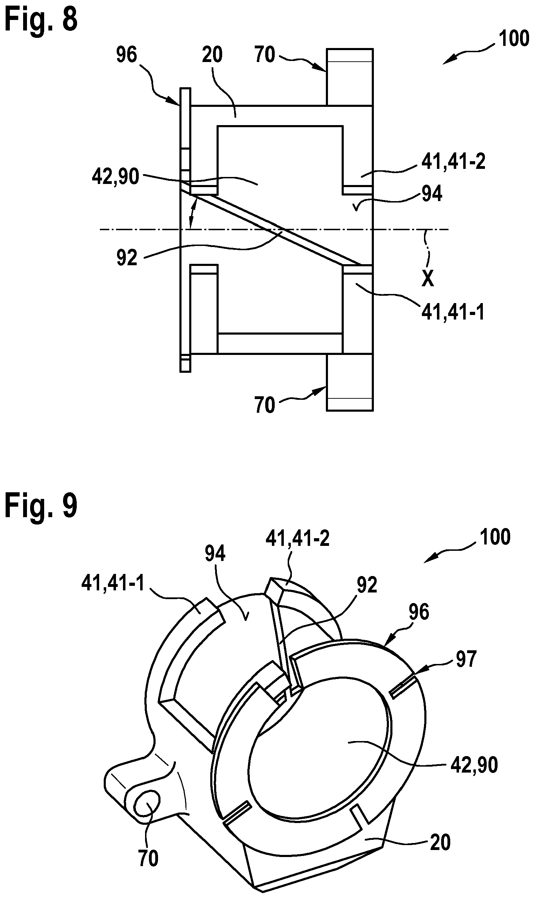

Die Figuren 8 und 9 zeigen in perspektivischer Seiten- sowie Schrägansicht eine andere Ausführungsform der erfindungsgemäßen Messanordnung 100, bei welcher die Lagerstelle 42 gebildet wird durch eine Hülse 90, die entweder vollständig oder zumindest auf ihrer Innenseite mit einem gleitenden Material ausgebildet ist. Die Hülse 90 besteht im Wesentlichen aus einem Hülsenmantel 94, welcher ein oder mehrere Schlitze 92 zur besseren Anpassung des Innenumfang der Hülse 90 an die zu umschließende Welle 16 und insbesondere des Torsionselements 18 aufweist. Die Hülse 90 kann z.B. von einer der Verdrehsicherung 70 abgewandten Seite des Sensorhalters 20 und den Halteschenkeln 41-1 und 41-2 des Kraftelements 41 eingesteckt werden, wobei im eingesteckten Zustand sich ein Rand oder Flansch 96 der Hülse 90 außen am Kraftelement 41 und insbesondere den ersten und zweiten Schenkel 41-1, 41-2 abstützt.

Bei den in den Figuren 8 und 9 gezeigten Ausführungsformen ist der Schlitz 42 schräg, also mit einem Winkel zur Symmetrieachse und Rotationsachse X ausgebildet. Es sind jedoch auch Schlitze 92 denkbar, die parallel zur Symmetrie oder Rotationsachse verlaufen.

Im vollständig montierten Zustand umfassen die Halteschenkel 41-1 und 41-2 des Kraftelements 41 die die Kontaktstellen oder Lagerstellen 42 bildenden Hülse 90, die ihrerseits mit ihrer Innenseite in Kontakt steht mit dem Torsionselement 18 der Kurbelwelle 16.

## Patentansprüche

1. Messanordnung (100) zur Messung des Drehmomentes (M) an einer Welle (16) und insbesondere des Torsionsmomentes der Welle (16),
mit:
- einer Sensoreinrichtung (30), welche eingerichtet ist, ein von der Welle (16) getragenes oder erzeugtes Magnetfeld (H) zu messen,
- einem Sensorhalter (20) zum Halten der Sensoreinrichtung (30) und zur Anordnung der Sensoreinrichtung (30) gegenüber einem Bereich (17a) einer Außenumfangsfläche (17) der Welle (16),
- mindestens einem Kraftelement (41), welches eingerichtet ist, durch Kraftbeaufschlagung den Sensorhalter (20) gegenüber dem Bereich (17a) der Außenumfangsfläche (17) der Welle (16) ortsfest anzuordnen, **dadurch gekennzeichnet, dass**
- das mindestens eine Kraftelement (41) mindestens einen Halteschenkel (41-1, 41-2) aufweist, und
- der mindestens eine Halteschenkel (41-1, 41-2) mit dem Sensorhalter (20) einstückig verbunden ist, die Welle (16) in deren Umfangsrichtung umfasst und sich dort an der Außenumfangsfläche (17) der Welle (16) abstützt, und
- das mindestens eine Kraftelement (41) eingerichtet ist, auf den Sensorhalter (20) eine Zugkraft so auszuüben, dass durch die Zugkraft der Sensorhalter (20) an den Bereich (17a) der Außenumfangsfläche (17) der Welle (16) herangezogen wird.

2. Messanordnung (100) nach Anspruch 1,
wobei das mindestens eine Kraftelement (41) eingerichtet ist, mit der Zugkraft an einer der Welle (16) zugewandten Außenseite (20a) des Sensorhalters (20) anzugreifen.

3. Messanordnung (100) nach einem der vorangehenden Ansprüche,
wobei das mindestens eine Kraftelement (41) ein elastisches Kraftelement ist.

4. Messanordnung (100) nach einem der vorangehenden Ansprüche,
- wobei der mindestens eine Halteschenkel (41-1, 41-2) sich in Wirkrichtung der Zugkraft und zu einer dem Sensorhalter (20) abgewandten Seite der Welle (16) hin erstreckt, die Welle (16) mit seinem distalen Ende (41e) in deren Umfangsrichtung umfasst und sich dort an der Außenumfangsfläche (17) der Welle (16) abstützt, und
- wobei der mindestens eine Halteschenkel (41-1, 41-2) so vorgespannt ist, dass er über die Kopplung an den Sensorhalter (20) und das Abstützen an der Außenumfangsfläche (17) der Welle (16) die Zugkraft auf den Sensorhalter (20) ausübt.

5. Messanordnung (100) nach Anspruch 4,
wobei ein Paar Halteschenkel (41-1,41-2) ausgebildet ist, welche in Bezug auf den Sensorhalter (20) und die Welle (16) einander gegenüberliegen und an gegenüberliegenden Stellen des Sensorhalters (20) mit dem Sensorhalter (20) gekoppelt sind und die Welle (16) in deren Umfangsrichtung in entgegen gesetzten Richtungen umfassen.

6. Messanordnung (100) nach Anspruch 4 oder 5,
wobei der Halteschenkel (41-1, 41-2) oder das Paar Halteschenkel (41-1, 41-2):
- mit der Außenumfangsfläche (17) der Welle (16) zugewandten Schenkelflächen oder Teilen davon an der Außenumfangsfläche (17) der Welle (16) anliegt und/oder
- die Welle (16) in deren Umfangsrichtung um insgesamt mehr als 180° und weniger als 360° umfasst.

7. Messanordnung (100) nach einem der vorangehenden Ansprüche,
wobei der Sensorhalter (20) und/oder das Kraftelement (41) mindestens eine Lagerstelle (42) bildet, welche insbesondere als Halbschalenlagerung ausgebildet ist und/oder durch das mindestens eine Kraftelement (41) am Bereich (17a) der Außenumfangsfläche (17) der Welle (16) federnd angestellt ist.

8. Messanordnung (100) nach einem der vorangehenden Ansprüche,
wobei die mindestens eine Lagerstelle (42) eine oder mehrere Kontaktstellen zwischen der Welle (16) und dem Sensorhalter (20) definiert.

9. Messanordnung (100) nach Anspruch 8,
wobei die Kontaktstellen (42) als Gleitlager und/oder Gleitbuchsen ausgebildet sind, vorzugsweise als in den Sensorhalter (20) eingesetzte Elemente und/oder dadurch, dass der Sensorhalter (20) insgesamt oder ein Bereich des Sensorhalters (20), welcher der Welle (16) zugewandt ist, mit oder aus einem gleitenden Material ausgebildet ist.

10. Messanordnung (100) nach Anspruch 9,
wobei die Gleitlager und/oder Gleitbuchsen als Teilkreisstücke jeweils mit einem Bogen von weniger als 180°ausgeildet sind.

11. Messanordnung (100) nach einem der Ansprüche 9 oder 10,
wobei die Kontaktstellen (42) und insbesondere die Gleitlager und/oder Gleitbuchsen gebildet werden von einer in das Kraftelement (41) einsteckbaren Hülse (90) von insbesondere kreiszylindrischer Gestaltung und/oder insbesondere mit einem oder mehreren Schlitzen (92) im Hülsenmantel (94) der Hülse (90), weiche parallel oder schräg zur Symmetrieachse (X) der Hülse (90) verlaufen.

12. Messanordnung (100) nach einem der vorangehenden Ansprüche,
mit einer Verdrehsicherung (70), weiche eingerichtet ist, ein Mitdrehen des Sensorhalters (20) mit der Welle (16) zu verhindern und welche insbesondere Teil des Sensorhalters (20) ist und/oder ein oder mehrere Bohrungen oder Rippen aufweist.

13. Messanordnung (100) nach einem der vorangehenden Ansprüche,
wobei der Bereich (17a) der Außenumfangsfläche (17) der Welle (16) von einem Torsionselement (18), insbesondere von einer Torsionswelle, mit oder aus einem magnetostriktiven und/oder magnetoelastischen Material gebildet ist, das eingerichtet ist zur Drehmomentübertragung als Zwischenwellenstück zwischen ersten und zweiten Wellenabschnitten (16-1, 16-2) der Welle (16).

14. Kurbeltrieb (2) für ein mit Muskelkraft und/oder Motorkraft betreibbares Fahrzeug (1), insbesondere für ein Elektrofahrrad (1),
mit:
- einer Welle (16), welche zur Aufnahme und drehfesten Kopplung mit mindestens einer Kurbel (7, 8) zur Drehmomentübertragung eingerichtet ist, und
- mit einer Messanordnung (100) nach einem der vorangehenden Ansprüche zur Messung des Drehmoments (M) an der Welle (16) und insbesondere des Torsionsmomentes (M) der Welle (16).

15. Mit Muskelkraft und/oder Motorkraft betreibbares Fahrzeug (1), insbesondere Elektrofahrrad (1), umfassend:
- einen Kurbeltrieb (2) nach Anspruch 14,
- einen elektrischen Antrieb (3), welcher insbesondere im Bereich des Kurbeltriebs (2) angeordnet ist, und
- eine Steuereinheit (10), welche zur Steuerung des elektrischen Antriebs (3) eingerichtet ist.

## Claims

1. Measuring arrangement (100) for measuring the torque (M) on a shaft (16) and in particular the torsional moment of the shaft (16),
with:
- a sensor device (30) that is designed to measure a magnetic field (H) to which the shaft (16) is subjected or that is produced by the shaft (16),
- a sensor holder (20) for holding the sensor device (30) and disposing the sensor device (30) relative to a region (17a) of an outer circumferential surface (17) of the shaft (16),
- at least one force element (41) that is designed to positionally fixedly dispose the shaft (16) relative to the region (17a) of the outer circumferential surface (17) by applying force to the sensor holder (20), **characterized in that**
- the at least one force element (41) comprises at least one retaining leg (41-1, 41-2), and
- the at least one retaining leg (41-1, 41-2) is integrally joined to the sensor holder (20), encircles the shaft (16) in the circumferential direction thereof and is supported there on the outer circumferential surface (17) of the shaft (16), and
- the at least one force element (41) is designed to exert a traction force onto the sensor holder (20) so that the sensor holder (20) is pulled onto the region (17a) of the outer circumferential surface (17) of the shaft (16) by the traction force.

2. Measuring arrangement (100) according to Claim 1, wherein the at least one force element (41) is designed to engage on an exterior (20a) of the sensor holder (20) facing the shaft (16) with the traction force.

3. Measuring arrangement (100) according to any one of the preceding claims,
wherein the at least one force element (41) is an elastic force element.

4. Measuring arrangement (100) according to any one of the preceding claims,
- wherein the at least one retaining leg (41-1, 41-2) extends in the direction of the action of the traction force and to a side of the shaft (16) facing away from the sensor holder (20), encircles the shaft (16) with the distal end (41e) thereof in the circumferential direction of said shaft and is supported there on the outer circumferential surface (17) of the shaft (16), and
- wherein the at least one retaining leg (41-1, 41-2) is pretensioned so that it exerts the traction force onto the sensor holder (20) via the coupling to the sensor holder (20) and the support on the outer circumferential surface (17) of the shaft (16).

5. Measuring arrangement (100) according to Claim 4, wherein a pair of retaining legs (41-1, 41-2) is implemented that lie opposite each other in relation to the sensor holder (20) and the shaft (16) and that are coupled at opposite points of the sensor holder (20) to the sensor holder (20) and encircle the shaft (16) in opposite directions in the circumferential direction thereof.

6. Measuring arrangement (100) according to Claim 4 or 5,
wherein the retaining leg (41-1, 41-2) or the pair of retaining legs (41- 1, 41-2):
- contacts the outer circumferential surface (17) of the shaft (16) with leg surfaces or parts thereof facing the outer circumferential surface (17) of the shaft (16) and/or
- encircles the shaft (16) in the circumferential direction thereof by a total of more than 180° and less than 360°.

7. Measuring arrangement (100) according to any one of the preceding claims,
wherein the sensor holder (20) and/or the force element (41) forms at least one bearing point (42), which is implemented in particular as a half-shell bearing and/or is spring-loaded against the region (17a) of the outer circumferential surface (17) of the shaft (16) by the at least one force element (41).

8. Measuring arrangement (100) according to any one of the preceding claims,
wherein the at least one bearing point (42) defines one or more contact points between the shaft (16) and the sensor holder (20).

9. Measuring arrangement (100) according to Claim 8, wherein the contact points (42) are implemented as slide bearings and/or slide bushes, preferably as elements inserted into the sensor holder (20) and/or by implementing the sensor holder (20) as a whole or a region of the sensor holder (20) facing the shaft (16) with or of a low-friction material.

10. Measuring arrangement (100) according to Claim 9, wherein the slide bearings and/or slide bushes are implemented as circle segments, each with an arc of less than 180°.

11. Measuring arrangement (100) according to any one of Claims 9 or 10,
wherein the contact points (42) and in particular the slide bearings and/or slide bushes are formed as a sleeve (90) that can be inserted into the force element (41) and that is in particular of a circular cylindrical shape and/or in particular with one or more slots (92) in the sleeve casing (94) of the sleeve (90), which run parallel to or at an angle to the axis of symmetry (X) of the sleeve (90).

12. Measuring arrangement (100) according to any one of the preceding claims,
with an anti-turn lock (70) that is designed to prevent the sensor holder (20) from being rotated with the shaft (16) and that in particular is part of the sensor holder (20) and/or has one or more bores or ribs.

13. Measuring arrangement (100) according to any one of the preceding claims,
wherein the region (17a) of the outer circumferential surface (17) of the shaft (16) is formed by a torsion element (18), in particular by a torsion shaft, with or of a magnetostrictive and/or magnetoelastic material, which is designed for torque transfer as an intermediate shaft part between the first and second shaft segments (16-1, 16-2) of the shaft (16).

14. Crankshaft (2) for a vehicle (1) that can be operated with muscle power and/or motor power, in particular for an electric bicycle (1),
with:
- a shaft (16), which is designed for receiving and rotationally fixed coupling to at least one crank (7, 8) for torque transfer and
- with a measuring arrangement (100) according to any one of the preceding claims for measuring the torque (M) on the shaft (16) and in particular the torsional moment (M) on the shaft (16).

15. Vehicle (1), in particular an electric bicycle (1), that can be operated by muscle power and/or motor power, comprising:
- a crankshaft (2) according to Claim 14,
- an electric drive (3), which is disposed in particular in the region of the crankshaft (2), and
- a control unit (10) that is designed for controlling the electric drive (3).

## Revendications

1. Dispositif de mesure (100) pour mesurer le couple de rotation (M) sur un arbre (16), et en particulier le moment de torsion de l'arbre (16), comprenant :
- un système de capteur (30) aménagé pour mesurer un champ magnétique (H) porté ou produit par l'arbre (16),
- un support de capteur (20) pour maintenir le système de capteur (30) et pour agencer le système de capteur (30) par rapport à une zone (17a) d'une surface circonférentielle extérieure (17) de l'arbre (16),
- au moins un élément de force (41) qui est aménagé pour agencer le support de capteur (20) de façon fixe par rapport à la zone (17a) de la surface circonférentielle extérieure (17) de l'arbre (16) par l'application d'une force,
**caractérisé en ce que**
- ledit au moins un élément de force (41) présente au moins une branche de maintien (41-1, 41-2), et
- ladite au moins une branche de maintien (41-1, 41-2) est reliée intégralement au support de capteur (20), entoure l'arbre (16) dans la direction circonférentielle de celui-ci et y prend appui sur la surface circonférentielle extérieure (17) de l'arbre (16), et
- ledit au moins un élément de force (41) est aménagé pour exercer une force de traction sur le support de capteur (20) de telle sorte que la force de traction attire le support de capteur (20) vers la zone (17a) de la surface circonférentielle extérieure (17) de l'arbre (16) .

2. Dispositif de mesure (100) selon la revendication 1, dans lequel ledit au moins un élément de force (41) est aménagé pour appliquer la force de traction à la face extérieure (20a) du support de capteur (20), tournée vers l'arbre (16).

3. Dispositif de mesure (100) selon l'une quelconque des revendications précédentes, dans lequel ledit au moins un élément de force (41) est un élément de force élastique.

4. Dispositif de mesure (100) selon l'une quelconque des revendications précédentes,
- dans lequel ladite au moins une branche de maintien (41-1, 41-2) s'étend dans la direction d'action de la force de traction et vers un côté de l'arbre (16), détourné du support de capteur (20), entoure l'arbre (16) par son extrémité distale (41e) dans la direction circonférentielle de celui-ci et y prend appui sur la surface circonférentielle extérieure (17) de l'arbre (16), et
- dans lequel ladite au moins une branche de maintien (41-1, 41-2) est précontrainte de telle sorte qu'elle exerce la force de traction sur le support de capteur (20) par le couplage au support de capteur (20) et l'appui sur la surface circonférentielle extérieure (17) de l'arbre (16).

5. Dispositif de mesure (100) selon la revendication 4, dans lequel une paire de branches de maintien (41-1, 41-2) est réalisée, qui se font face l'une à l'autre par rapport au support de capteur (20) et à l'arbre (16) et sont couplées à des endroits opposés du support de capteur (20) et entourent l'arbre (16) dans la direction circonférentielle de celui-ci dans des sens opposés.

6. Dispositif de mesure (100) selon la revendication 4 ou 5, dans lequel la branche de maintien (41-1, 41-2) ou la paire de branches de maintien (41-1, 41-2) :
- est appliquée à la surface circonférentielle extérieure (17) de l'arbre (16) par des surfaces de branche ou des parties de celles-ci, tournées vers la surface circonférentielle extérieure (17) de l'arbre (16), et/ou
- l'arbre (16) comprend dans sa direction circonférentielle au total plus de 180° et moins de 360°.

7. Dispositif de mesure (100) selon l'une quelconque des revendications précédentes, dans lequel le support de capteur (20) et/ou l'élément de force (41) forment au moins un point de palier (42) qui est réalisé en particulier sous la forme d'un palier à semi-frette et/ou est monté de manière élastique par ledit au moins un élément de force (41) au niveau de la zone (17a) de la surface circonférentielle extérieure (17) de l'arbre (16) .

8. Dispositif de mesure (100) selon l'une quelconque des revendications précédentes, dans lequel ledit au moins un point de palier (42) définit un ou plusieurs points de contact entre l'arbre (16) et le support de capteur (20).

9. Dispositif de mesure (100) selon la revendication 8, dans lequel les points de contact (42) sont réalisés sous forme de paliers à glissement et/ou de douilles à glissement, de préférence sous la forme d'éléments insérés dans le support de capteur (20), et/ou en ce que le support de capteur (20) tout entier ou une partie du support de capteur (20), qui est tournée vers l'arbre (16), est formé(e) avec ou à partir d'un matériau lisse.

10. Dispositif de mesure (100) selon la revendication 9, dans lequel les paliers à glissement et/ou les douilles à glissement sont réalisés sous la forme de parties de cercle respectivement avec un arc de moins de 180°.

11. Dispositif de mesure (100) selon l'une quelconque des revendications 9 ou 10, dans lequel les points de contact (42) et en particulier les paliers à glissement et/ou les douilles à glissement sont formés par une douille (90) pouvant être emmanchée dans l'élément de force (41), de préférence de configuration cylindrique circulaire, et/ou en particulier avec une ou plusieurs fentes (92) dans l'enveloppe de douille (94) de la douille (90), qui s'étendent en parallèle ou en oblique par rapport à l'axe de symétrie (X) de la douille (90).

12. Dispositif de mesure (100) selon l'une quelconque des revendications précédentes, comprenant un dispositif anti-rotation (70), qui est aménagé pour empêcher une rotation du support de capteur (20) avec l'arbre (16) et qui fait en particulier partie du support de capteur (20) et/ou présente un ou plusieurs perçages ou une ou plusieurs nervures.

13. Dispositif de mesure (100) selon l'une quelconque des revendications précédentes, dans lequel la zone (17a) de la surface circonférentielle extérieure (17) de l'arbre (16) est formée par un élément de torsion (18), en particulier un arbre de torsion, avec ou composé d'un matériau magnétostrictif et/ou magnéto-élastique qui est aménagé pour la transmission de couple sous la forme d'une pièce d'arbre intermédiaire entre des première et deuxième portions d'arbre (16-1, 16-2) de l'arbre (16).

14. Mécanisme à manivelle (2) pour un véhicule (1) pouvant être actionné par la force musculaire et/ou la puissance d'un moteur, en particulier pour une bicyclette électrique (1), comprenant :
- un arbre (16), qui est aménagé pour recevoir et être couplé de manière solidaire en rotation avec au moins une manivelle (7, 8) pour la transmission de couple, et
- un dispositif de mesure (100) selon l'une quelconque des revendications précédentes pour mesurer le couple (M) sur l'arbre (16) et en particulier le moment de torsion (M) de l'arbre (16).

15. Véhicule (1) pouvant être entraîné par la force musculaire et/ou la puissance d'un moteur, en particulier bicyclette électrique (1), comprenant :
- un mécanisme à manivelle (2) selon la revendication 14,
- un entraînement électrique (3) qui est disposé en particulier au niveau du mécanisme à manivelle (2), et
- une unité de commande (10) qui est aménagée pour commander l'entraînement électrique (3).
